# EUROPEAN PATENT SPECIFICATION

(11) **EP 3 580 488 B1**
(45) Date of publication and mention of the grant of the patent: **02.03.2022**
(21) Application number: 18702636.4
(22) Date of filing: 23.01.2018
(51) Int. Cl.: F16L 55/035

(54) **HOLDING ELEMENT FOR A DUCT**
HALTEELEMENT FÜR EINEN KANAL
ÉLÉMENT DE MAINTIEN POUR UN CONDUIT

(30) Priority: 07.02.2017 DE 102017102331
(43) Date of publication of application: 18.12.2019
(73) Proprietor: A. Raymond et Cie. SCS, 38000 Grenoble (FR)
(72) Inventor: ANNA, Melanie, 79618 Rheinfelden (DE); SCHULZ, Stefan, 79540 Lörrach (DE); LINDGENS, Marcel, 79585 Steinen (DE)
(74) Representative: Grünecker Patent- und Rechtsanwälte PartG mbB
(86) International application number: PCT/EP2018/051536
(87) International publication number: WO 2018/145889

(56) References cited:
- EP-A1- 0 490 157
- DE-U1- 9 315 194
- US-A1- 2014 299 723

## Description

The present invention relates to a holding element for a duct.

US 2,404,531 A discloses a holding block for holding a group of ducts in an aircraft. The holding block comprises two complementary sub-blocks with semi-circular recesses corresponding to one another. If the complementary sub-blocks are placed on top of each other, corresponding recesses of the two sub-blocks jointly form a respective passage opening for a duct to be held. The two sub-blocks can be secured by using screws in the mutual relative position receiving the ducts. The screws can be used at the same time to fasten the holding block at a desired installation position for the ducts. The surfaces of the sub-blocks facing each other to form the passage openings for the ducts can each be provided with a cushion strip, so that the ducts are clamped between the opposite cushion strips when the screws for connecting the sub-blocks are tightened. The cushion strips are designed to dampen vibrations in the ducts and prevent excessive wear of the ducts. The sub-blocks each have a flange on both sides, which follows the contour of the surface facing the other sub-block and thus also the contour of the recesses. The cushion strips each have a C-shaped cross section at their two side regions to receive a corresponding flange of the corresponding sub-block. In this way, the cushion strips can be simply pushed onto the sub-blocks without having to be fastened in any other way. The cushion strips should therefore be easily replaceable if necessary.

US 2,387,295 A discloses a fastening clip for a duct for use in an aircraft. The fastening clip comprises a relatively rigid metal strip that surrounds the duct. The two ends of the metal strip are positioned on top of each other so that openings formed in it align with one another. Through these openings, the fastening clip can be fastened with a screw to a structural part of the aircraft and at the same time be closed. On an inner surface of the metal strip facing the duct, a rubber strip is provided to dampen vibrations of the duct. The lateral edges of the rubber strip are provided with embracing structures, which fasten the rubber strip to the metal strip by embracing the edges of the metal strip. On the surface of the rubber strip facing inwards towards the duct, protruding elements are provided to improve the vibration-damping properties of the fastening clip. In the mounted state, the rubber strip of the fastening clip lies over a large part of the circumference of the duct on said duct. On the portion of the duct facing the ends of the metal strip, however, there is a space between the duct and the fastening clip in the case of such fastening clips due to their type.

US 4,881,705 A discloses a plastic holding element for tubes. The holding element comprises a main body made of plastic and an insert molded onto it in a two-stage injection molding process. The material of the insert is softer than that of the main body. The insert is shaped to receive the tube. The holding element comprises an integrally molded hinged lid, which is also provided with an insert made of the softer material. If a tube is positioned in the holding element, the lid can be closed and the tube fixed in this way. If the holding element is to be adapted for use with another tube diameter, at least the shape of the inserts must be adapted.

EP 0 490 157 A1 discloses a holding element comprising a hard main body comprising two parts that are linked together by a pivot connection and can be closed around ducts to be held. A receiving body made of soft elastic material is provided at an inside of the main body to engage the ducts. The receiving body comprises outer shells defining circular openings, when in the closed position. Further, the receiving body comprises inner shells forming circular inner openings of smaller diameter for receiving the ducts, when in the closed position. The inner shells are connected to the outer shells by integral connection parts.

DE 93 15 194 U1 discloses a pipe clamp having a rubber inset for engaging the pipe to be held. The rubber inset comprises a plurality of annular protrusions protruding towards a center of the pipe-receiving opening.

Further holding elements for ducts are for example known from JP 2001-343006 A, JP 2000-170718 A, EP 0 838 626 A2, US 5 464 179 A, US 2 395 745 A, US 2015/377387 A1, US 2013/146720 A1, DE 39 07 067 A1, US 2005/067538 A1, DE 42 05 439 A1, EP 2 131 084 A2, EP 1 013 978 A2, DE 10 2007 052 701 A1, US 5 954 300 A, US 5 731 359 A, US 2013/240684 A1 and US 2010/025272 A1.

It is the object of the invention to provide a holding element for a duct which has improved vibration-damping characteristics and stabilizes the duct particularly well in the desired position. In particular, the holding element is also to be suited for receiving ducts of different diameters. In addition, a suitable method is to be indicated for manufacturing such a holding element.

As for the holding element, this object is achieved by the subject matter of claim 1. As for the method, the object is achieved by the subject matter of claim 11. The dependent claims indicate advantageous embodiments of the invention.

The holding element according to the invention can be used with any kind of duct. For example, the holding element may be suitable for receiving a pipe for fluids or an electrical line. In particular, the holding element may be designed for ducts provided in motor vehicles. These can be, for example, oil- or air-conducting ducts. It is also conceivable to receive a duct composed of several individual ducts in the holding element. Preferably, a duct to be received has an at least substantially circular cross section.

A holding element for a duct according to the invention comprises a first holding part and a second holding part. The first holding part comprises a first frame element with a first arch-shaped area and a first elastic damping element provided on the first frame element. The second holding part comprises a second frame element with a second arch-shaped area and a second elastic damping element provided on the second frame element. The first holding part and the second holding part are moveable relative to each other between a closed state and an open state. In the closed state, the first frame element and the second frame element together form a receiving opening for circumferentially receiving the duct. The receiving opening is delimited by the first and second arch-shaped area together. In the open state, the duct is released.

If the holding element is in the open state, the duct can be positioned adjacent to the first or second arch-shaped area. If the holding element is then transferred to the closed state, the duct is received in the receiving opening delimited by the first and second arch-shaped area. Preferably, the holding element can then be returned to the open state in order to be able to remove the duct from the holding element again.

According to the invention, the receiving opening, which is delimited by the arch-shaped areas in the closed state of the holding element, has a circular opening cross-section. The first and second elastic damping elements each have an elastic plate. The elastic plates extend in the circumferential direction of the circular receiving opening along the corresponding arch-shaped area. The elastic plates are curved in such a way that in the closed state of the holding element they are curved or bulged from the corresponding arch-shaped area towards a middle axis of the circular receiving opening along their whole extension in the circumferential direction of the circular receiving opening along the corresponding arch-shaped area. If a duct is received in the holding element, the elastic damping elements are thus bulged over their whole extension in the circumferential direction of the circular receiving opening in the direction towards the duct.

In the closed state of the holding element, the bulge of the elastic plates can be pushed outwards by a received duct, i.e. towards the corresponding arch-shaped area. This results in an elastic restoring force of the elastic damping elements towards the middle axis of the recess, which stabilizes the duct in its position. The arch-shaped areas of the frame elements serve as stabilizing counter elements for the elastic damping elements, in particular the elastic plates, and promote the build-up of the elastic restoring force. Due to the circular opening cross-section of the receiving opening, a distribution of the restoring forces directed into the center of the receiving opening, which distribution is homogeneous in the circumferential direction of the receiving opening, occurs when a duct is received. The elastic damping elements can be fully supported by the arch-shaped areas in a maximally efficient way.

The interaction between the elastic damping elements and the arch-shaped areas dampens vibrations of a received duct. Due to the circular opening cross-section and the corresponding uniform support of the elastic damping elements, good damping can be achieved which is substantially independent of the direction of the vibrations.

Due to the special geometry of the elastic damping elements with the bulge towards the middle axis of the circular receiving opening, the holding element according to the invention can be used with ducts of different diameters. Especially small variations in the diameter of the duct can be absorbed by the bulge of the elastic plates. If a duct of a relatively small diameter is received, the elastic plates are only slightly deformed by the duct in the closed state of the holding element. By contrast, if a duct with a larger diameter is used, the elastic plates are deformed more strongly. The holding element according to the invention can be usefully used with duct diameters ranging from a minimum duct diameter, where the duct just comes into contact with both elastic damping elements, to a maximum diameter, where the holding element can just be moved to the closed position and the elastic plates are deformed to a maximum. The restoring forces stabilizing the position of the duct vary depending on the duct diameter due to the different deformation of the elastic damping elements. Nevertheless, a good stabilizing effect can be achieved over a certain range of variations in the duct diameter without modifying the holding element.

In order to provide optimum support for the elastic damping elements, the frame elements can have a greater rigidity than the elastic damping elements. This can be achieved, for example, by suitable shaping and/or material selection.

Preferably, the elastic plates extend in the circumferential direction of the circular receiving opening, each at least substantially completely along the corresponding arch-shaped area. This enables the duct to come into contact with the elastic damping elements substantially over the full circumference of the receiving opening and provides optimum vibration damping in every radial direction. The fact that the elastic plates extend in the circumferential direction of the circular receiving opening "substantially" completely along the corresponding arch-shaped area can mean that there is only a gap between the elastic plates in the areas where the two elastic plates meet in the closed state of the holding element. The gap width may be limited to a maximum of 8 mm, 5 mm, 2 mm or 1 mm. In particular, the gaps together may be not more than 10%, 5%, 3% or 1% of the circumference of the circular receiving opening.

Preferably, the elastic plates are curved in such a way that along a direction axial to the middle axis of the circular receiving opening they first approach towards the middle axis, then reach a maximum proximity to the middle axis and finally again withdraw from the middle axis. This kind of curvature of the elastic plates makes it easy and efficient to achieve a good vibration damping effect as well as an adequate elastic retaining force for the duct.

The maximum proximity of the elastic plates to the middle axis is preferably the same over the entire circumference of the circular receiving opening. In this way, an even damping effect is achieved around the entire circumference of the receiving opening, so that transverse vibrations of the duct in particular are efficiently dampened regardless of their direction. A holding effect exerted by the damping elements on the duct also has a homogeneous effect over the entire circumference of the circular receiving opening.

The vibration damping effect becomes particularly useful in any direction and is therefore universally useful if the elastic plates run homogeneously along the circumferential direction of the circular receiving opening. This can mean that they do not show any slope or curvature along the circumferential direction of the circular receiving opening. In particular, the elastic plates can be symmetrical with respect to the middle axis of the circular receiving opening.

Since the vibration damping effect is already given by the curvature of the elastic plates, the elastic plates can have a homogeneous thickness. Thus, a good damping effect is achieved with minimal use of materials and design effort. However, it would also be conceivable that the elastic plates could have suitably thickened areas, for example to increase the elastic restoring force provided by them.

The elastic damping elements are preferably firmly connected to the corresponding frame element. For this purpose, the damping elements can each have at least one fastening protrusion, which is received in a form fit relation in a complementary fastening opening of the corresponding frame element. It is particularly advantageous if several fastening protrusions are provided along the circumferential direction of the circular receiving opening on a damping element, each of which is received in a complementary fastening opening of the frame element. Ideally, the fastening protrusions of the damping elements are evenly distributed around the circumference of the circular receiving opening to provide uniform support for the elastic damping elements.

Preferably, the first holding part and the second holding part are connected to each other, in particular integrally, via a pivot connection. The pivot connection can allow a pivoting between the closed and the open state. Such a pivotable connection simplifies the installation of the holding element, since the mutual relative position between the holding parts is determined by the pivot connection. In addition, the pivot connection provides an undetachable connection between the holding parts.

Preferably, the first holding part comprises a first locking element and the second holding part a second locking element. The locking elements can allow a mutual locking of the holding elements in the closed state, in particular by way of mutual engagement. Preferably, the locking can be released non-destructively. The locking elements can, for example, be designed to create a locking by hook-like engagement of one locking element into the other locking element.

Alternatively, for example, it would be conceivable that the locking elements allow magnetic locking.

According to the invention, a method for manufacturing the described holding element is also provided. According to this process, the first holding part is manufactured in a two-step injection molding process. The first frame element is injection-molded from a first material and the first elastic damping element is injection-molded from a second elastic material. The second holding part is also manufactured in a two-step injection molding process. The second frame element is injection-molded from the first material and the second elastic damping element is injection-molded from the second elastic material. The first material used for the frame elements is more rigid than the second elastic material used for the elastic damping elements.

With the two-stage injection molding process, it is possible to manufacture the holding element cost-effectively and efficiently. The first holding part is preferably manufactured in a common two-step injection molding process with the second holding part. Thus, the first and second frame elements can be manufactured in a common casting mold, preferably together with a pivot connection connecting them. The first and second elastic damping elements of a holding element can also be cast in a common casting mold.

When manufacturing a holding part (or both holding parts together), it is preferable to injection-mold the frame element first and then insert it at least partially into a casting mold for the elastic damping element. That way, when casting the elastic damping element, a connection with the frame element can be established at the same time. The frame elements preferably cinprises at least one, at least two or at least three fastening openings, which are filled with the second elastic material during injection molding of the corresponding elastic damping element. In this way, a form fit connection between the frame element and the corresponding elastic damping element can be achieved directly during the injection molding process.

The invention will now be explained in more detail on the basis of an embodiment with reference to the attached figures, of which:
- Figure 1:: is a schematic perspective view of a holding element according to an embodiment in an open state;
- Figure 2:: is a schematic side view of the holding element according to the embodiment in the open state;
- Figure 3:: is a schematic perspective view of the holding element according to the embodiment in a closed state; and
- Figure 4:: is a schematic side view of the holding element according to the embodiment in the closed state.

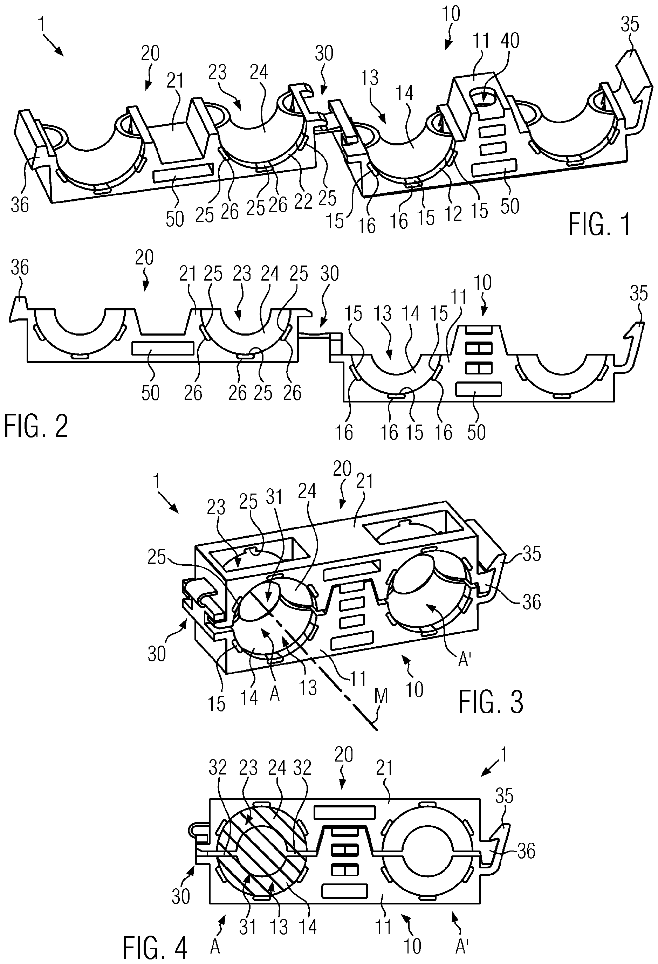

The holding element 1 for a duct as shown in the figures comprises a first holding part 10 and a second holding part 20. The holding parts 10, 20 are moveable relative to each other between a closed state, in which they circumferentially receive a duct together, and an open state releasing the duct. Figures 1 and 2 show an open state of the holding element and Figures 3 and 4 show the closed state.

The first holding part 10 comprises a first frame element 11 and the second holding part 20 comprises a second frame element 21. In the illustrated embodiment, the frame elements 11, 21 are pivotably connected to each other via a pivot connection 30. By pivoting by way of the pivot connection 30 the holding parts 10, 20 can be pivoted relative to each other between the open and the closed state. Preferably, the pivot connection 30 is made integral with the first holding part 10 and the second holding part 20, in particular with their frame elements 11, 21.

The first holding part 10 comprises a first locking element 35 and the second holding part 20 comprises a second locking element 36. The locking elements 35, 36 allow by way of a mutual engagement a particularly releasable mutual locking of the holding elements 10, 20 in the closed state. The locking elements 35, 36 of the illustrated embodiment are configured to establish a locking by hook-like engagement of the first locking element 35 into the second locking element 36.

The first frame element 11 comprises a first arch-shaped area 12. The second frame element 21 comprises a second arch-shaped area 22. In the closed state of the holding element 1 the first frame element 11 and the second frame element 21 together form a receiving opening 31 for circumferentially receiving a duct. The receiving opening 31 is delimited by the first arch-shaped area 12 and the second arc-shaped area 22 together. As can particularly be seen in Figure 4, the receiving opening 31 comprises a circular opening cross section. The circular opening cross section is marked in Figure 4 by hatching. For delimiting the circular receiving opening 31 each of the first arch-shaped area 12 and the second arch-shaped area 22 may have a contour corresponding to the contour of a part of an inner surface of a cylinder. For instance, each of the arch-shaped areas 12, 13 may have the contour of a "half pipe" form.

Moreover, the first holding part 10 comprises a first elastic damping element 13 provided on the first frame element 11. The second holding part 20 correspondingly comprises a second elastic damping element 23 provided on the second frame element 21. Each of the first and the second elastic damping element 13, 23 comprises an elastic plate 14, 24 extending in a circumferential direction of the circular receiving opening 31 along the corresponding arch-shaped area (first arch-shaped area 12 for the first elastic damping element 13 and second arc-shaped area 22 for the second elastic damping element 23). The elastic plates 14, 24 each have such a curvature that they are curved or bulged from the corresponding arch-shaped area 12, 22 towards a middle axis M of the circular receiving opening 31 along their whole extension in the circumferential direction of the circular receiving opening 31 along the corresponding arch-shaped area 12, 22.

As is particularly conceivable with Figures 1 and 3, the elastic plates 14, 24 of the elastic damping elements 13, 23 are deformed by a duct which in the closed state of the holding element 1 is received in the receiving opening 31. Specifically, the curvatures or bulges of the elastic plates 14, 24 get into contact with the outer area of the duct and can thereby be deformed outwards, i.e. away from the middle axis M. The special shape of the elastic plates 14, 24 thereby creates an elastic restoring force towards the surface of the duct and towards the middle axis M of the circular opening 31, whereby a position-stabilizing force is exerted on the duct. Specifically, radially directed vibrations of a duct received in the receiving opening can be converted into a temporary deformation of the elastic damping elements 13, 23 and thereby dampened.

As shown in the figures, the elastic plates 14, 24 can have a homogeneous thickness. Due to the special bulge of the elastic plates 14, 24 an excellent damping effect can also be achieved without thickening and/or specially mounted engagement elements for engagement with the duct.

In the illustrated embodiment, the elastic plates 14, 24 extend in the circumferential direction of the circular receiving opening 31 substantially fully along the corresponding arch-shaped area 12, 22. As shown in Figures 3 and 4, which show the closed state of the holding element 1, a corresponding gap 32 over which no elastic plate 14, 24 extends is present in the circumferential direction of the receiving opening 31 just in the two boundary areas between the first elastic damping element 13 and the second elastic damping element 23. Preferably, the gaps 32 together represent only a negligible amount of the total circumference of the circular receiving opening 31. For instance, the added gap width of both gaps 32 can be less than 10%, less than 5%, less than 3% or less than 1% of the total circumference of the circular receiving opening 31. Due to the substantially full extension of the elastic plates 14, 24 along the circumference of the circular receiving opening 31 a duct received in the receiving opening 31 is substantially fully stabilized and dampened.

In the illustrated embodiment, the elastic plates 14, 24 first approach towards the middle axis M during progression along a direction axial with respect to the middle axis M of the circular receiving opening 31. A maximum proximity to the middle axis M is then reached, whereupon the elastic plates 14, 24 finally withdraw again from the middle axis M. The maximum proximity of the elastic plates 14, 24 with respect to the middle axis M is the same over the entire circumference of the circular receiving opening 31 in the illustrated embodiment. This has the effect that the first elastic damping element 13 and the second elastic damping element 23 get, around the whole circumference of the receiving opening 31, into uniform contact with a duct received in the receiving opening 31. In particular, the elastic damping elements 13, 23 can exert an elastic restoring force on the duct homogeneously around the circumference of the circular receiving opening 31. The holding element 1 allows an effective dampening of transverse vibrations of the duct substantially independently of the vibration plane.

As described, the elastic plates 14, 24 have a curvature forming the bulge with respect to a progression along a direction axial to the middle axis M of the circular receiving opening 31. By contrast, along the circumferential direction of the circular receiving opening 31 the elastic plates 14, 24 have no slope or curvature, but extend homogeneously. This way, substantially direction-independent damping characteristics of the holding element 1 are achieved.

In the illustrated embodiment, the elastic plates 14, 24 of the first elastic damping element 13 and of the second elastic damping element 23 together form a shape in the closed state of the holding element 1 that substantially corresponds to the shape created when an inner area of a torus comprising the passage opening of the torus is cut out.

The elastic damping elements 13, 24 are each mounted, particularly firmly mounted, on the corresponding frame element 11, 21. To this end each of the first elastic damping element 13 and the second elastic damping element 23 comprises a plurality of fastening protrusions 15, 25 in the illustrated embodiment. In the illustrated embodiment each of the elastic damping elements 13, 23 comprises six fastening protrusions 15, 25, of which three are present at the side of the holding element 1 facing the viewer in the figures and three are present at the side of the holding element 1 facing away from the viewer. If necessary, a different number of fastening protrusions 15, 25 is also conceivable, for instance one, two, three, four, five or more than six fastening protrusions 15, 25 per elastic damping element 13, 23. The fastening protrusions 15, 25 are each received in a form fit relation in a complementary fastening opening 16, 26 of the corresponding frame element 11, 21 to fasten the elastic damping element 13, 23 to the corresponding frame element 11, 21. By fastening the elastic damping elements 13, 23 to the frame elements 11, 21 the elastic damping elements 13, 23 are supported so as to be able to provide an optimum stabilization and vibration damping for the duct. Due to the circular opening cross section of the receiving opening 31 the elastic damping elements 13, 23 are uniformly supported at least substantially fully.

As can be seen by way of the second holding element 20 in the view of Figure 3, the second arch-shaped area 22 of the second frame element 21 is not continuously formed along a direction axial to the middle axis M of the circular receiving opening 31. The second arch-shaped area 22 is formed in the illustrated embodiment in two areas spaced apart from each other with respect to the direction axial to the middle axis M, in which the receiving openings 26 are also formed for receiving the fastening protrusions 25 of the second elastic damping element 23. An opening is provided thereinbetween in the second frame element 21. Alternatively, the second arc-shaped area 22 could however also be made continuous. This is also true for the first arch-shaped area 12 of the first holding part 10.

The holding element 1 of the embodiment shown in the figures is evidently configured for the parallel reception of two ducts. The features forming a receiving area A for a first duct have already been described (e.g. the first and second arch-shaped area 12, 22 which form the receiving opening 31, and the first and second elastic damping element 13, 23). As has been illustrated, the holding element 1 according to the embodiment additionally comprises an additional receiving area A' for a further duct. As shown, this area is formed analogously. However, it would also be conceivable that the further receiving area A' has for instance another diameter of the circular receiving opening to be able to receive ducts with a significantly different diameter. Of course, the provision of further receiving areas or of only one receiving area is also possible.

During assembly the holding element 1 can be fastened to a suitable support structure, for instance to a structural part of a vehicle. In principle, any desired types of fastening are here conceivable. For instance, the holding element 1 can be welded to the support structure through a welding bolt or otherwise. For receiving a welding bolt the illustrated holding element 1 comprises an opening 40 penetrating the first frame element 11. However, it would also be conceivable to screw on the holding element 1 through the opening 40. The holding element 1 could for instance also be fastened with a T pin or a cable tie to a support structure. A cable tie could for instance be guided through the mounting openings 50 formed in the frame elements 11, 21. It would also be conceivable to make the holding element 1 directly integral with a support structure.

For the manufacture of the illustrated holding element 1 the first holding part 10 is manufactured in a two-step injection-molding process. The first frame element 1 is here injection-molded from a first material and the first elastic damping element 13 is injection-molded from a second elastic material. The second holding part 20 is also manufactured in a two-step injection-molding process. The second frame element 21 is here injected-molded from the first material and the second elastic damping element 23 is injection-molded from the second elastic material. The first material used for the frame elements 11, 21 is more rigid than the second elastic material used for the elastic damping elements 13, 23.

Preferably, the first holding part 10 is manufactured in a common two-step injection-molding process with the second holding part 20. Thus, the first and the second frame elements 11, 21 can be manufactured in a common casting mold, preferably together with the pivot connection 30 connecting them. The first and the second elastic damping element 13, 23 of the holding element 1 can also be cast in a common casting mold.

During manufacture of a holding part 10, 20 (or both holding parts 10, 20 together), the frame element 11, 21 is preferably injection-molded first and this element is then inserted at least partially into a casting mold for the elastic damping element 13, 23. Thus during casting of the elastic damping element 13, 23 connection to the frame element 11, 21 can be established at the same time. For this purpose the fastening openings 16, 26 of the frame elements 11, 21 are filled with the second elastic material during injection molding of the corresponding elastic damping element 13, 23.

However, it would also be conceivable to cast the elastic damping element 13, 23 first and then to insert it at least partially into a casting mold for the frame element 11, 21, wherein again in the second casting step the connection could be established between the frame element 11, 21 and the damping element 13, 23.

## Claims

1. Holding element (1) for a duct, comprising:
a first holding part (10) with a first frame element (11) having a first arch-shaped area (12) and with a first elastic damping element (13) provided at the first frame element (11); and
a second holding part (20) with a second frame element (21) having a second arch-shaped area (22) and with a second elastic damping element (23) provided at the second frame element (21),
wherein the first holding part (10) and the second holding part (20) are moveable relative to each other between a closed state, in which the first frame element (10) and the second frame element (20) together form a receiving opening (31) for circumferentially receiving the duct and being delimited by the first and second arch-shaped areas (12, 22), and an open state releasing the duct;
wherein the receiving opening (31) has a circular opening cross section; and
wherein each of the first and second elastic damping elements (13, 23) comprises an elastic plate (14, 24) extending in a circumferential direction of the circular receiving opening (31) along the corresponding arch-shaped area (12, 22), **characterised in that** the elastic plates (14, 24) each have such a curvature that in the closed state of the holding element (1) they are bulged from the corresponding arch-shaped area (12, 22) towards a middle axis (M) of the circular receiving opening (31) along their whole extension in the circumferential direction of the circular receiving opening (31) along the corresponding arch-shaped area (12, 22).

2. Holding element according to claim 1, wherein the elastic plates (14, 24) each extend at least substantially fully along the corresponding arch-shaped area (12, 22) in the circumferential direction of the circular receiving opening (31).

3. Holding element according to claim 1 or 2, wherein the curvature of the elastic plates (14, 24) is such that along a direction axial with respect to the middle axis (M) of the circular receiving opening (31), the elastic plates (14, 24) first approach towards the middle axis (M), then reach a maximum proximity to the middle axis (M), and finally again withdraw from the middle axis (M).

4. Holding element according to claim 3, wherein the maximum proximity of the elastic plates (14, 24) to the middle axis (M) is the same along the complete circumference of the circular receiving opening (31).

5. Holding element according to any one of the preceding claims, wherein the elastic plates (14, 24) homogeneously extend along the circumferential direction of the circular receiving opening (31), and in particular do not comprise any slope or curvature along the circumferential direction of the circular receiving opening (31).

6. Holding element according to any one of the preceding claims, wherein the elastic plates (14, 24) comprise a homogeneous thickness.

7. Holding element according any one of the preceding claims, wherein the elastic damping elements (13, 23) each comprise at least one fastening protrusion (15, 25), which is received in a complementary fastening opening (16, 26) of the corresponding frame element (11, 21) in a form fit relation, such that the elastic damping element (13, 23) is fastened to the corresponding frame element (11, 21).

8. Holding element according to any one of the preceding claims, wherein the first holding part (10) and the second holding part (20) are connected by a pivot connection (30), which allows pivoting between the closed state and the open state.

9. Holding element according to any one of the preceding claims, wherein the first holding part (10) comprises a first locking element (35) and the second holding part (20) comprises a second locking element (36), wherein the locking elements (35, 36) allow mutual locking, in particular in a releasable manner, of the holding parts (10, 20) in the closed state, in particular by mutual engagement.

10. Holding element according to any one of the preceding claims, wherein the frame elements (11, 21) have a greater rigidity than the elastic damping elements (13, 23).

11. Method for manufacturing a holding element (1) according to any one of the preceding claims, comprising:
manufacturing the first holding part (10) in a two-step injection-molding process, wherein in a step the first frame element (11) is injection-molded from a first material, and in a further step the first elastic damping element (13) is injection-molded from a second, elastic material; and
manufacturing the second holding part (20) in a two-step injection-molding process, wherein in a step the second frame element (21) is injection-molded from the first material, and in a further step the second elastic damping element (23) is injection-molded from the second, elastic material,
wherein the first material is more rigid than the second, elastic material.

12. Method according to claim 11, wherein during manufacturing of each holding part (10, 20), the frame element (11, 21) is injection-molded first and is then at least partially inserted in a casting mold for the elastic damping element (13, 23), such that during molding of the elastic damping element (13, 23), the frame element (11, 21) is directly formed thereto.

13. Method according to claim 11 or 12, wherein the frame elements (11, 21) comprise at least one, at least two or at least three fastening openings (16, 26), which are filled with the second, elastic material during injection molding of the corresponding elastic damping element (13,23).

14. Method according to any one of claims 11 to 13, wherein the first and second frame elements (11, 21) are injection molded together with the pivot connection (30) in a common injection molding step, such that the pivot connection (30) is formed integrally with the frame elements (11, 21).

## Patentansprüche

1. Halteelement (1) für eine Leitung, umfassend:
ein erstes Halteteil (10) mit einem eine erste Bogenfläche (12) aufweisenden ersten Rahmenelement (11) und einem an dem ersten Rahmenelement (11) vorgesehenen elastischen ersten Dämpfungselement (13); und
ein zweites Halteteil (20) mit einem eine zweite Bogenfläche (22) aufweisenden zweiten Rahmenelement (21) und einem an dem zweiten Rahmenelement (21) vorgesehenen elastischen zweiten Dämpfungselement (23),
wobei das erste Halteteil (10) und das zweite Halteteil (20) relativ zueinander zwischen einem geschlossenen Zustand, in dem das erste Rahmenelement (11) und das zweite Rahmenelement (21) zusammen eine von der ersten und der zweiten Bogenfläche (12, 22) begrenzte Aufnahmeöffnung (31) zur umlaufenden Aufnahme der Leitung bilden, und einem offenen, die Leitung freigebenden Zustand bewegbar sind;
wobei die Aufnahmeöffnung (31) einen kreisförmigen Öffnungsquerschnitt hat; und
wobei das erste und das zweite elastische Dämpfungselement (13, 23) jeweils eine sich in Umfangsrichtung der kreisförmigen Aufnahmeöffnung (31) entlang der zugehörigen Bogenfläche (12, 22) erstreckende elastische Platte (14, 24) aufweisen, **dadurch gekennzeichnet, dass** die elastischen Platten (14, 24) jeweils eine derartige Krümmung aufweisen, dass sie in dem geschlossenen Zustand des Halteelements (1) über ihre gesamte Erstreckung in Umfangsrichtung der kreisförmigen Aufnahmeöffnung (31) entlang der zugehörigen Bogenfläche (12, 22) hinweg von der zugehörigen Bogenfläche (12, 22) in Richtung auf eine Mittelachse (M) der kreisförmigen Aufnahmeöffnung (31) hin ausgewölbt sind.

2. Halteelement nach Anspruch 1, wobei sich die elastischen Platten (14, 24) jeweils in Umfangsrichtung der kreisförmigen Aufnahmeöffnung (31) zumindest im Wesentlichen vollständig entlang der zugehörigen Bogenfläche (12, 22) erstrecken.

3. Halteelement nach Anspruch 1 oder 2, wobei die Krümmung der elastischen Platten (14, 24) derart ist, dass sich die elastischen Platten (14, 24) entlang einer bezüglich der Mittelachse (M) der kreisförmigen Aufnahmeöffnung (31) axialen Richtung zunächst der Mittelachse (M) annähern, dann eine maximale Nähe zur Mittelachse (M) erreichen und sich schließlich wieder von der Mittelachse (M) entfernen.

4. Halteelement nach Anspruch 3, wobei die maximale Nähe der elastischen Platten (14, 24) zur Mittelachse (M) über den gesamten Umfang der kreisförmigen Aufnahmeöffnung (31) gleich ist.

5. Halteelement nach einem der vorangehenden Ansprüche, wobei die elastischen Platten (14, 24) homogen entlang der Umfangsrichtung der kreisförmigen Aufnahmeöffnung (31) verlaufen, insbesondere keine Steigung oder Krümmung entlang der Umfangsrichtung der kreisförmigen Aufnahmeöffnung (31) aufweisen.

6. Halteelement nach einem der vorangehenden Ansprüche, wobei die elastischen Platten (14, 24) eine homogene Dicke aufweisen.

7. Halteelement nach einem der vorangehenden Ansprüche, wobei die elastischen Dämpfungselemente (13, 23) jeweils zumindest einen Befestigungsvorsprung (15, 25) aufweisen, welcher formschlüssig in einer komplementären Befestigungsöffnung (16, 26) des zugehörigen Rahmenelements (11, 21) aufgenommen ist, wodurch das elastische Dämpfungselement (13, 23) an dem zugehörigen Rahmenelement (11, 21) befestigt ist.

8. Halteelement nach einem der vorangehenden Ansprüche, wobei das erste Halteteil (10) und das zweite Halteteil (20) über eine Schwenkverbindung (30) verbunden sind, welche ein Verschwenken zwischen dem geschlossenen Zustand und dem offenen Zustand erlaubt.

9. Halteelement nach einem der vorangehenden Ansprüche, wobei das erste Halteteil (10) ein erstes Verriegelungselement (35) aufweist und das zweite Halteteil (20) ein zweites Verriegelungselement (36) aufweist, wobei die Verriegelungselemente (35, 36) ein gegenseitiges, vorzugsweise lösbares, Verriegeln der Haltteile (10, 20) in dem geschlossenen Zustand erlauben, insbesondere durch gegenseitigen Eingriff.

10. Halteelement nach einem der vorangehenden Ansprüche, wobei die Rahmenelemente (11, 21) eine größere Steifigkeit aufweisen als die elastischen Dämpfungselemente (13, 23).

11. Verfahren zum Herstellen eines Halteelements (1) nach einem der vorangehenden Ansprüche, umfassend:
Herstellen des ersten Halteteils (10) in einen zweistufigen Spritzgießverfahren, wobei in einem Schritt das erste Rahmenelement (11) aus einem ersten Material spritzgegossen wird und in einem weiteren Schritt das erste elastische Dämpfungselement (13) aus einem zweiten, elastischen Material spritzgegossen wird; und
Herstellen des zweiten Halteteils (20) in einen zweistufigen Spritzgießverfahren, wobei in einem Schritt das zweite Rahmenelement (21) aus dem ersten Material spritzgegossen wird und in einem weiteren Schritt das zweite elastische Dämpfungselement (23) aus dem zweiten, elastischen Material spritzgegossen wird,
wobei das erste Material starrer ist als das zweite, elastische Material.

12. Verfahren nach Anspruch 11, wobei bei der Herstellung eines Halteteils (10, 20) jeweils zuerst das Rahmenelement (11, 21) spritzgegossen wird und dieses dann zumindest teilweise in eine Gussform für das elastische Dämpfungselement (13, 23) eingesetzt wird, so dass beim Gießen des elastischen Dämpfungselements (13, 23) das Rahmenelement (11, 21) gleich angeformt wird.

13. Verfahren nach Anspruch 11 oder 12, wobei die Rahmenelemente (11, 21) zumindest ein, zumindest zwei oder zumindest drei Befestigungsöffnungen (16, 26) aufweisen, welche beim Spritzgießen des zugehörigen elastischen Dämpfungselements (13, 23) mit dem zweiten, elastischen Material gefüllt werden.

14. Verfahren nach einem der Ansprüche 11 bis 13, wobei das erste und das zweite Rahmenelement (11, 21) in einem gemeinsamen Spritzgießvorgang zusammen mit der Schwenkverbindung (30) gegossen werden, so dass die Schwenkverbindung (30) integral mit den Rahmenelementen (11, 21) ausgebildet wird.

## Revendications

1. Élément de maintien (1) pour un conduit, comprenant :
une première pièce de maintien (10) avec un premier élément de structure (11) présentant une première zone en forme d'arche (12) et avec un premier élément d'amortissement élastique (13) disposé sur le premier élément de structure (11) ; et
une deuxième pièce de maintien (20) avec un deuxième élément de structure (21) présentant une deuxième zone en forme d'arche (22) et avec un deuxième élément d'amortissement élastique (23) disposé sur le deuxième élément de structure (21),
dans lequel la première pièce de maintien (10) et la deuxième pièce de maintien (20) sont mobiles l'une par rapport à l'autre entre un état fermé, dans lequel le premier élément de structure (10) et le deuxième élément de structure (20) forment ensemble une ouverture de réception (31) pour recevoir circonférentiellement le conduit et étant délimitée par les première et deuxième zones en forme d'arche (12, 22), et un état ouvert libérant le conduit ;
dans lequel l'ouverture de réception (31) présente une section transversale d'ouverture circulaire ; et
dans lequel chacun des premier et deuxième éléments d'amortissement élastiques (13, 23) comprend une plaque élastique (14, 24) s'étendant dans une direction circonférentielle de l'ouverture de réception circulaire (31) le long de la zone en forme d'arche correspondante (12, 22), **caractérisé en ce que** les plaques élastiques (14, 24) présentent chacune une courbure telle que dans l'état fermée de l'élément de maintien (1) sont bombées depuis la zone en forme d'arche correspondante (12, 22) vers un axe médian (M) de l'ouverture de réception circulaire (31) le long de leur extension complète dans la direction circonférentielle de l'ouverture de réception circulaire (31) le long de la zone en forme d'arche correspondante (12, 22).

2. L'élément de maintien selon la revendication 1, dans lequel les plaques élastiques (14, 24) s'étendent chacune au moins substantiellement complètement le long de la zone en forme d'arche correspondante (12, 22) dans la direction circonférentielle de l'ouverture de réception circulaire (31).

3. L'élément de maintien selon la revendication 1 ou 2, dans lequel la courbure des plaques élastiques (14, 24) est telle que le long d'une direction axiale par rapport à l'axe médian (M) de l'ouverture de réception circulaire (31), les plaques élastiques (14, 24) se rapprochent d'abord de l'axe médian (M), puis atteignent une proximité maximale de l'axe médian (M) et enfin s'éloignent à nouveau de l'axe médian (M).

4. L'élément de maintien selon la revendication 3, dans lequel la proximité maximale des plaques élastiques (14, 24) de l'axe médian (M) est la même le long de la circonférence complète de l'ouverture de réception circulaire (31).

5. L'élément de maintien selon l'une quelconque des revendications précédentes, dans lequel les plaques élastiques (14, 24) s'étendent de manière homogène le long de la direction circonférentielle de l'ouverture de réception circulaire (31), et en particulier ne comprennent aucune pente ou courbure le long de la direction circonférentielle de l'ouverture de réception circulaire (31).

6. L'élément de maintien selon l'une quelconque des revendications précédentes, dans lequel les plaques élastiques (14, 24) comprennent une épaisseur homogène.

7. L'élément de maintien selon l'une quelconque des revendications précédentes, dans lequel les éléments d'amortissement élastiques (13, 23) comprennent chacun au moins un débordement de fixation (15, 25), qui est accueilli dans une ouverture de fixation complémentaire (16, 26) de l'élément de structure correspondant (11, 21) dans une relation d'adéquation de forme, de sorte que l'élément d'amortissement élastique (13, 23) est fixé à l'élément de structure correspondant (11, 21).

8. L'élément de maintien selon l'une quelconque des revendications précédentes, dans lequel la première pièce de maintien (10) et la deuxième pièce de maintien (20) sont connectées par une connexion de pivot (30), qui permet un pivotement entre l'état fermé et l'état ouvert.

9. L'élément de maintien selon l'une quelconque des revendications précédentes, dans lequel la première pièce de maintien (10) comprend un premier élément de verrouillage (35) et la deuxième pièce de maintien (20) comprend un deuxième élément de verrouillage (36), dans lequel les éléments de verrouillage (35, 36) permettent un verrouillage mutuel, en particulier d'une manière libérable, des pièces de maintien (10, 20) dans l'état fermé, en particulier par solidarisation mutuelle.

10. L'élément de maintien selon l'une quelconque des revendications précédentes, dans lequel les éléments de structure (11, 21) présente une rigidité supérieure aux éléments d'amortissement élastiques (13, 23).

11. Procédé de fabrication d'un élément de maintien (1) selon l'une quelconque des revendications précédentes, comprenant :
fabrication de la première pièce de maintien (10) dans un processus de moulage par injection en deux étapes,
dans lequel à une étape le premier élément de structure (11) est moulé par injection à partir d'un premier matériau, et dans une étape consécutive le premier élément d'amortissement élastique (13) est moulé par injection à partir d'un deuxième matériau élastique ; et fabrication de la deuxième pièce de maintien (20) dans un processus de moulage par injection en deux étapes, dans lequel à une étape le deuxième élément de trame (21) est moulé par injection à partir d'un premier matériau, et dans une étape consécutive le deuxième élément d'amortissement élastique (23) est moulé par injection à partir d'un deuxième matériau élastique,
dans lequel le premier matériau est plus rigide que le deuxième matériau élastique.

12. Le procédé selon la revendication 11, dans lequel lors d'une fabrication de chaque pièce de maintien (10, 20), l'élément de structure (11, 21) est d'abord moulé par injection et est ensuite au moins partiellement inséré dans un moule de coulée pour l'élément d'amortissement élastique (13, 23), de sorte qu'au cours d'un moulage de l'élément d'amortissement élastique (13, 23), l'élément de structure (11, 21) est directement formé sur celui-ci.

13. Le procédé selon la revendication 11 ou 12, dans lequel les éléments de structure (11, 21) comprennent au moins un, au moins deux ou au moins trois ouvertures de fixation (16, 26), qui sont remplies avec le deuxième matériau élastique au cours d'un moulage par injection de l'élément d'amortissement élastique correspondant (13, 23).

14. Le procédé selon l'une quelconque des revendications 11 à 13, dans lequel les premier et deuxième éléments de structure (11, 21) sont moulés par injection ensemble avec la connexion de pivot (30) à une étape de moulage par injection commune, de sorte que la connexion de pivot (30) est constituée intégralement avec les éléments de structure (11, 21).
